# EUROPÄISCHE PATENTSCHRIFT

(11) **EP 2 754 346 B1**
(45) Veröffentlichungstag und Bekanntmachung des Hinweises auf die Patenterteilung: **09.09.2015**
(21) Anmeldenummer: 13192662.8
(22) Anmeldetag: 13.11.2013
(51) Int. Cl.: A01D 41/14, A01D 61/00

(54) **Schneidwerk**
Cutting assembly
Barre de coupe

(30) Priorität: 14.01.2013 DE 102013100322
(43) Veröffentlichungstag der Anmeldung: 16.07.2014
(73) Patentinhaber: CLAAS Selbstfahrende Erntemaschinen GmbH, 33428 Harsewinkel (DE)
(72) Erfinder: Füchtling, Christian, 48317 Rinkerode (DE)

(56) Entgegenhaltungen:
- EP-A2- 2 138 029
- EP-A2- 2 422 606
- US-A1- 2008 276 590
- US-B2- 7 937 920

## Beschreibung

Die vorliegende Erfindung betrifft ein Schneidwerk gemäß dem Oberbegriff des Anspruches 1 (siehe z.B. EP-A-2 422 606).

Ein Schneidwerk der eingangs genannten Art kommt zum Einsatz, wenn große von dem Schneidwerk abgeerntete und aufgenommene Erntegutmengen über große Arbeitsbreiten hinweg störungsfrei einer Erntemaschine zur Verarbeitung zugeführt werden sollen. Um eine gute Bodenführung des Schneidwerkes in unebenem Terrain zu erreichen, sind eine Vielzahl von gemeinsam den Messerbalken wie auch das Band tragenden Tragarmen derart an dem Hauptrahmen des Schneidwerkes angeordnet, dass diese eine in Längsrichtung des Schneidwerkes gesehen wellenförmige Bewegung ausführen können, um der Bodenkontur zu folgen.

Hierzu ist aus der US 7,937,920 B2 ein Schneidwerk der eingangs genannten Art bekannt. Das Schneidwerk umfasst einen aus Quer- und Längsträgern gebildeten Rahmen, mit einem Mittenabschnitt sowie zumindest zwei Seitenabschnitten, auf denen jeweils Förderbänder zur Gutförderung eingesetzt werden. An dem jeweiligen Längsträger ist ein Tragarm um eine horizontale Achse drehbar gelagert angeordnet, der sich senkrecht zu diesem nach vorne erstreckt. An ihrem Vorderende sind die Tragarme mit einem flexiblen Messerbalken verbunden, der sich über die Breite des Schneidwerkes erstreckt. Endseitig des jeweiligen Seitenabschnittes sind dem Antrieb des Bandes dienende Walzen angeordnet, die in der gleichen Ebene wie die Tragarme liegen. Die Walzen werden von den unmittelbar benachbart angeordneten Tragarmen getragen. Das Förderband umgibt sowohl die Walzen als auch die Tragarme. Um der Bodenkontur folgen zu können, werden die Tragarme in vertikaler Richtung ausgelenkt und mit diesen der Messerbalken sowie das Förderband, welche beide von den Tragarmen getragen werden. Eine Auslenkung der Tragarme bewirkt, dass der Messerbalken der Bodenkontur in einer wellenförmigen Bewegung folgt, während das Förderband sich zwischen jeweils einander benachbarten Tragarmen spannt und einen linienförmigen Verlauf aufweist. Dadurch werden die Bandführung und die Bandabdichtung erschwert. So können sich zwischen dem Förderband und Abdichtelementen an der Vorderseite des Schneidwerkes Spalte ausbilden, durch die Erntegut zwischen die Ober- und Unterseite des Förderbandes gelangt. Zudem wird das Förderband punktuell stärkeren Belastungen durch Reibung und Verformung ausgesetzt, was einen höheren Verschleiß an dem Förderband zur Folge hat.

Der Erfindung liegt somit die Aufgabe zu Grunde, ein Schneidwerk der eingangs genannten Art derart weiterzuentwickeln, dass das Förderband einer Auslenkung der den Messerbalken tragenden Arme besser folgen kann, so dass eine bessere Abdichtung erreichbar ist, und dabei einen geringeren Verschleiß aufweist.

Die Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass der jeweilige Seitenabschnitt eine Vielzahl von das Förderband tragende Tragelementen aufweist, welche in axialer Richtung gegenüber dem Grundrahmen in einer Lagerstelle verschiebbar gelagert sind. Die Verschiebbarkeit der Tragelemente bei einer vertikalen Auslenkung des Messerbalkens ermöglicht ein nachführen des Förderbandes entsprechend dem Bewegungsablauf bei der Auslenkung des Messerbalkens, so dass ein Spannen des Förderbandes zwischen jeweils benachbarten Tragelementen weitgehend vermieden werden kann, was zu einer besseren Abdichtbarkeit führt und einen geringeren Verschleiß an dem Förderband zur Folge hat.

Vorzugsweise kann die Lagerstelle des jeweiligen Tragelementes als ein Schubgelenk ausgeführt sein. Das Schubgelenk erlaubt neben der translatorischen Bewegung auch eine Drehbewegung um die Längsachse des Tragarmes, so dass eine bessere Anpassung des dem Messerbalken zugewandten vorderen Förderbandabschnittes an die wellenförmige Bewegung bei der Auslenkung des Messerbalkens erreichbar ist. Die Spaltbildung lässt sich hierdurch deutlich verringern.

In bevorzugter Weiterbildung kann jedes Tragelement an seinem dem Messerbalken zugewandten Endabschnitt eine Anlagefläche für das Förderband aufweisen. Dies dient der Führung des Förderbandes, welches von den Tragelementen getragen wird.

Weiterhin kann jedes Tragelement an seinem der Rückwand zugewandten Endabschnitt eine Bandführung aufweisen. Auch dies dient der Führung des Förderbandes.

Dabei können die Tragelemente relativ zu der Bandführung beweglich sein. Somit können die einzelnen Tragelemente der Bewegung des Messerbalkens besser folgen, wobei die Führung des Förderbandes zwischen der Bandführung und der Anlagefläche hiervon weniger beeinflusst wird, da eine Stauchung des Förderbandes durch die näherungsweise Beibehaltung des Abstandes der Bandführung zu der Anlagefläche reduziert wird.

Insbesondere kann die Bandführung von den Tragelementen durchdrungen sein.

Vorteilhafterweise kann die Bandführung als zumindest ein profiliertes, plattenförmiges Segment ausgeführt sein, welches sich abschnittsweise in Längsrichtung des jeweiligen Tragelementes erstreckt. Das zumindest eine Segment dient somit auch als eine Auflagefläche für das Förderband, was zusammen mit der Vielzahl von Tragelementen eine nahezu ganzflächige Unterlage für einen Teil des Förderbandes bildet.

Dabei kann das Segment eine sich parallel zum Grundrahmen erstreckende Führungsausnehmung aufweisen. Diese Führungsausnehmung dient der Aufnahme eines korrespondierenden Führungselementes an der den Tragarmen zugewandten Innenseite des Förderbandes, so dass eine sichere Führung des Förderbandes erreicht wird, um ein Verschieben des Förderbandes quer zu dessen Förderrichtung möglichst zu vermeiden.

Weiterhin kann das Segment sich parallel zu den Tragelementen erstreckende, zueinander beabstandet angeordnete Ausnehmungen aufweisen. Die Ausnehmungen, die vorzugsweise schlitzartig ausgeführt sind, erlauben eine hohe Torsions- und Biegeflexibilität der Bandführung. Dies ist besonders vorteilhaft, da der Drehpunkt der den Messerbalken tragenden Tragarme zu der Bandführung auf den Tragelementen deutlich beabstandet ist.

In vorteilhafter Ausgestaltung können die Ausnehmungen beidseitig der Führungsausnehmung angeordnet sein. Die Ausnehmungen lassen sich in fertigungstechnisch günstiger Weise beispielsweise als Lasereinschnitte realisieren.

Vorzugsweise kann das Segment eine sich abschnittsweise senkrecht zu seiner Oberfläche erstreckende, parallel zu dem Grundrahmen verlaufende Wandung aufweisen.

Insbesondere können an dem Messerbalken über dessen Breite verteilt eine Vielzahl von Gutleitelementen unter einem Winkel zu diesem geneigt nebeneinander angeordnet sein. Diese dienen dazu, von dem Messerbalken abgeschnittenes Erntegut in Richtung des Förderbandes abzulenken.

Bevorzugt kann jedes Gutleitelement eine annähernd parallel zu der Oberseite des Förderbandes liegende Stirnkante aufweisen, an der ein durchgehendes, sich über die Breite des jeweils mindestens einen Seitenabschnittes des Schneidwerkes erstreckendes Abdichtband befestigt ist, das das Förderband abschnittsweise überlappt.

Die vorliegende Erfindung wird nachstehend anhand eines in den Zeichnungen dargestellten Ausführungsbeispieles näher erläutert.

Es zeigen:
- Fig. 1: eine schematische, teilweise freigeschnittene Ansicht eines Schneidwerkes;
- Fig. 2: eine Teilansicht eines Seitenabschnittes des Schneidwerkes gemäß Fig. 1;
- Fig. 3: eine teilweise freigeschnittene Ansicht der Vorderseite des Schneidwerkes von schräg oben;
- Fig. 4: eine Teilansicht des Seitenabschnittes gemäß Fig. 2 von hinten;
- Fig. 5: eine perspektivische Ansicht von zwischen Förderbändern angeordneten Tragelementen gemäß Fig. 2;
- Fig. 6: eine teilweise freigeschnittene Ansicht auf das Förderband von schräg oben;
- Fig. 7: eine Detailansicht einer Bandführung gemäß Fig. 6;
- Fig. 8: eine Teilansicht des vorderen Bereiches des Schneidwerkes von der Seite gemäß Fig. 1.

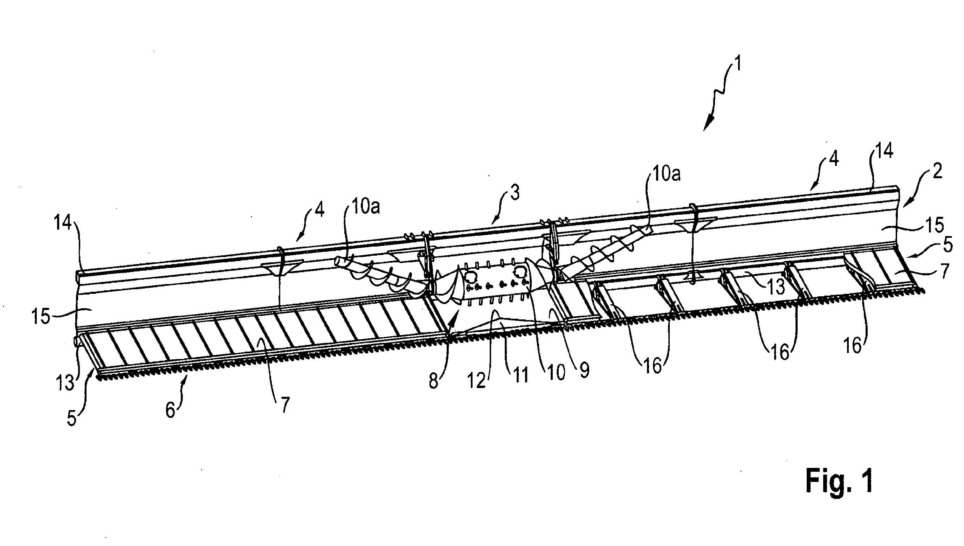

Die Darstellung in Fig. 1 zeigt eine schematische, teilweise freigeschnittene Ansicht auf ein Schneidwerk 1. Das Schneidwerk 1 weist einen Hauptrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite des Schneidwerkes 1 ein durchgehender, flexibler Messerbalken 6 angeordnet, der sich im Wesentlichen über die gesamte Bereite des Schneidwerkes 1 erstreckt. An dem Grundrahmen 2 des Schneidwerkes 1 sind nicht dargestellte Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 6.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 mindestens ein endlos umlaufendes Förderband 7 umfasst. Die endlos umlaufenden Förderbänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren, wo es einer Einzugsvorrichtung 8 zugeführt wird. Die Einzugsvorrichtung 8 ist als eine antreibbare Einzugswalze 10 ausgeführt, der sich seitlich nach außen erstreckende Einzugsschnecken 10a zugeordnet sind. Die Einzugsvorrichtung 8 führt das von den endlosen Förderbändern 7 dem Mittenabschnitt 3 seitlich zugeführte Erntegut einer in dem Grundrahmen 2 vorgesehenen, hinter der Einzugswalze 10 befindlichen Öffnung zu, durch welche das Erntegut durch einen an einem nicht dargestellten Mähdrescher befindlichen Einzugskanal, an dem das Schneidwerk 1 befestigbar ist, dem Mähdrescher zur weiteren Verarbeitung übergeben wird.

Der Mittenabschnitt 3 umfasst eine Bodenplatte 9, die auf ihrer der oberhalb der Bodenplatte 9 angeordneten Einzugswalze 10 zugewandten Oberseite konturiert ausgeführt ist, während die dem Boden zugewandte Unterseite der Bodenplatte 9 im Wesentlichen eben ausgeführt ist. Die konturierte Oberseite der Bodenplatte 9 weist einen keilförmigen, erhabenen Vorsprung 11 auf. Der Vorsprung 11 ist von der Vorderkante des Schneidwerkes 1 ausgehend sich in Richtung der Einzugsvorrichtung 8 verjüngend ausgeführt und mündet in einer der Einzugswalze 10 zugewandten Spitze 12. Der Vorsprung 11 dient der zwangsgeführten Gutumlenkung, um das von den Bändern 7 bereitgestellte Erntegut in den Einzugsbereich der Einzugsvorrichtung 8 umzulenken und dadurch die Gutannahme zu verbessern. Die Höhe des Vorsprunges 11 kann dabei variieren, um eine ausreichende Gutumlenkung zu sichern.

Gemäß der Darstellung in Fig. 1 ist ein Seitenabschnitt 4 teilweise freigeschnitten, um die unterhalb des Förderbandes 7 befindliche Struktur des Schneidwerkes 1 zu veranschaulichen. Der Aufbau der Seitenteile 4 ist identisch, so dass nur ein Seitenteil 4 im Teilschnitt dargestellt ist. Der Grundrahmen 2 weist sich vertikal zur Bewegungsrichtung des Förderbandes 7 erstreckende Rückwände 15 auf, die zwischen vorzugsweise hohlzylindrischen Profilelementen 13, 14 eingefasst sind. Im Mittenabschnitt 3 ist die Einzugsvorrichtung 8 an den Profilelementen 13, 14 des Grundrahmens 2 angeordnet. Jeder Seitenabschnitt 4 weist eine Vielzahl von um eine horizontale Achse schwenkbar an dem Grundrahmen 2 angeordneten Tragarmen 16 auf. Die Tragarme 16 des jeweiligen Seitenabschnittes 4 tragen den flexiblen Messerbalken 6 und werden gemeinsam mit diesem durch Unebenheiten im Boden in vertikaler Richtung ausgelenkt, wenn das Schneidwerk 1 im Erntebetrieb über den Boden geführt wird. Der Messerbalken 6 ist starr mit dem jeweiligen Tragarm 16 verbunden.

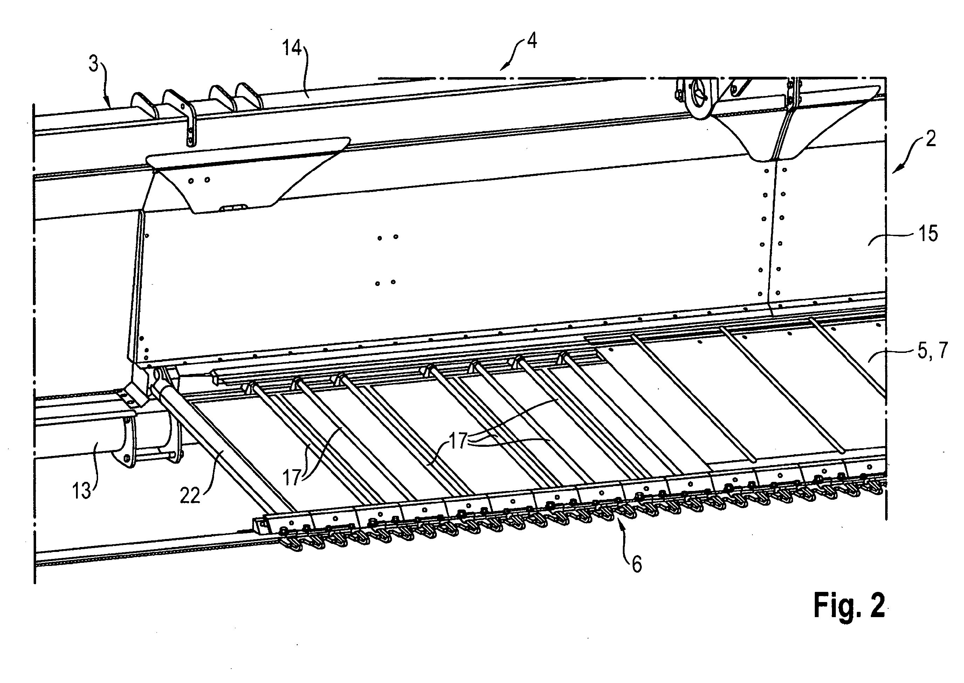

In Fig. 2 ist eine Teilansicht eines Seitenabschnittes 4 des Schneidwerkes gemäß Fig. 1 dargestellt. Anhand dieser Figur soll der Aufbau und die Anordnung der mindestens ein endlos umlaufendes Förderband 7 umfassenden Fördervorrichtung 5 der Seitenabschnitte 4 erläutert werden. Das Förderband 7 wird von einer Vielzahl oberhalb der Tragarme 16 angeordneten separaten Tragelementen 17 getragen, die sich durch das umlaufende Förderband 7 erstrecken. Die Tragelemente 17 sind im Hauptrahmen 2 gelagert und ermöglichen somit dem Förderband 7 eine vertikale Ausgleichsbewegung, wenn das Schneidwerk 1 im Erntebetrieb über den Boden geführt wird, wie weiter unten detailliert ausgeführt wird. Dabei erstrecken sich die Tragelemente 17 in einer Ebene oberhalb der Tragarme 16 liegend parallel zu diesen in Richtung des Messerbalkens 6. Der Antrieb und die Umlenkung des Förderbandes 7 erfolgt beidseitig des jeweiligen Seitenabschnittes 4 durch Umlenkrollen 22, von denen zumindest eine antreibbar ist, um das Förderband 7 endlos umlaufend anzutreiben.

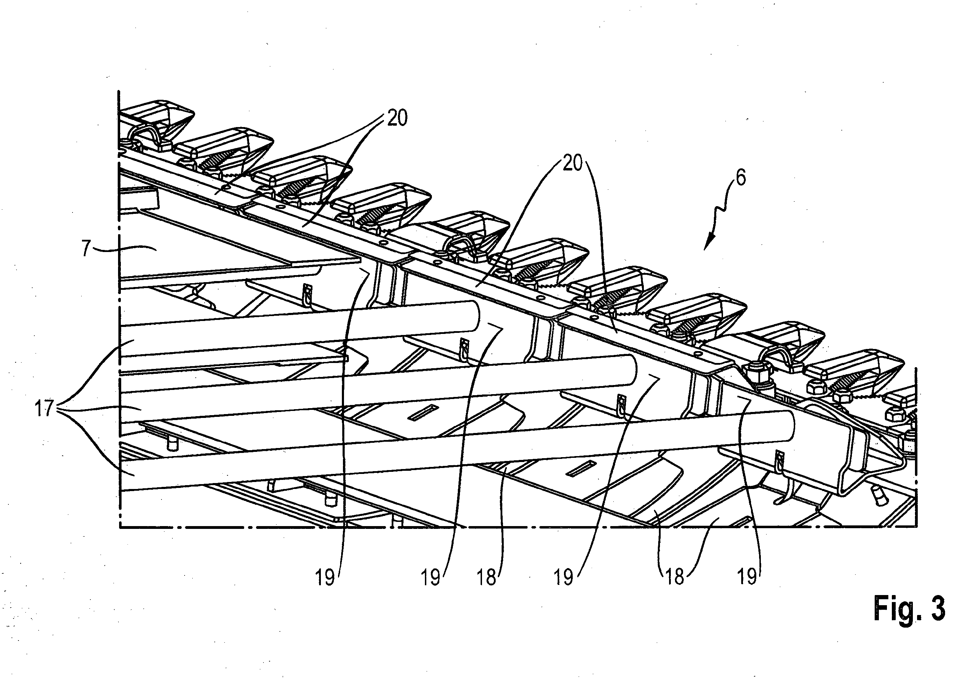

Die Darstellung in Fig. 3 zeigt eine teilweise freigeschnittene Ansicht der Vorderseite des Schneidwerkes 1 von schräg oben. Aus dieser Darstellung ist ersichtlich, dass jedes sich in Richtung des Messerbalkens 6 erstreckende Tragelement 17 an seinem dem Messerbalken 6 zugewandten Endabschnitt eine Anlagefläche 19 für das Förderband 7 aufweist. Die Anlagefläche 19 ist in dem dargestellten Ausführungsbeispiel als ein profiliertes Blech ausgeführt, welches an einem an dem Messerbalken 6 befestigten Übergangsblech 20 angeordnet ist. Über die Breite des Schneidwerkes 1 gesehen sind eine Vielzahl von Übergangsblechen 20 nebeneinander angeordnet, denen die Aufgabe zukommt, von dem Messerbalken 6 abgeschnittenes Erntegut auf das Förderband 7 abzulenken 7. Die Anlagefläche 19 erstreckt sich zumindest abschnittsweise senkrecht zur Längsachse der Tragelemente 17, so dass das Förderband 7 mit seiner sich quer zur Umlaufrichtung des Förderbandes 7 erstreckenden Kante an der Anlagefläche 19 anliegt und sich an dieser abstützt. Die Übergangsbleche 20 überragen die Anlagefläche 19 in vertikaler Richtung, um zu verhindern, dass Erntegut in den Bereich zwischen den Anlageflächen 19 und dem Messerbalken 6 gelangen kann. Unterhalb der Tragelemente 17 sind Gleitkufen 18 angeordnet, die mit einem Ende mit dem Messerbalken 6 verbunden und mit ihrem anderen Ende schwenkbar an dem jeweiligen Tragarm 16 angelenkt sind. Das Schneidwerk 1 wird mit den Gleitkufen 19 über den Boden geführt, welche durch Unebenheiten im Boden eine Auslenkung erfahren, die auf die Tragarme 16 übertragen werden und zu einer vertikalen Auslenkung des Messerbalkens 6 beziehungsweise des Förderbandes 7 führen.

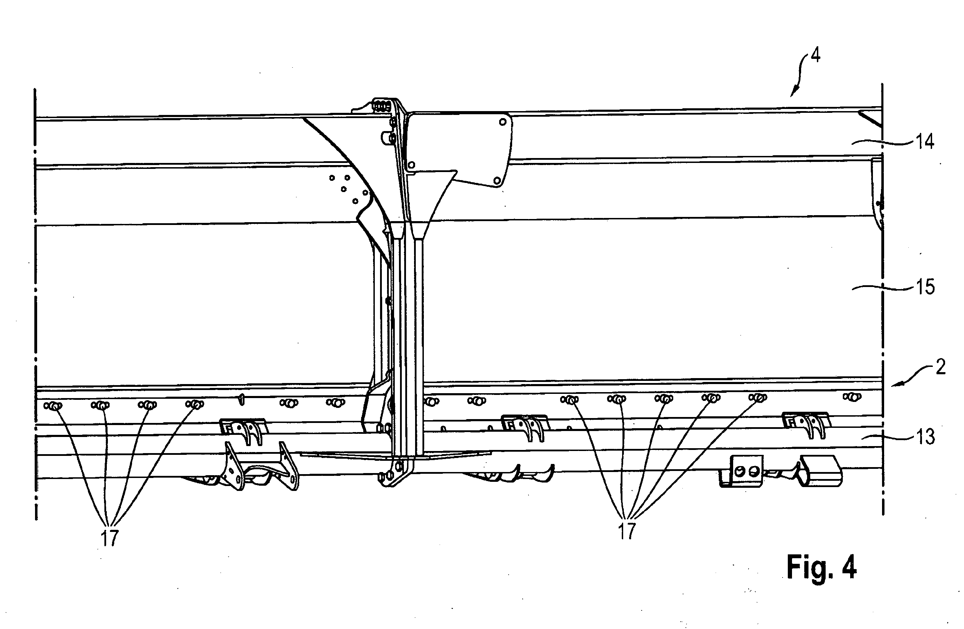

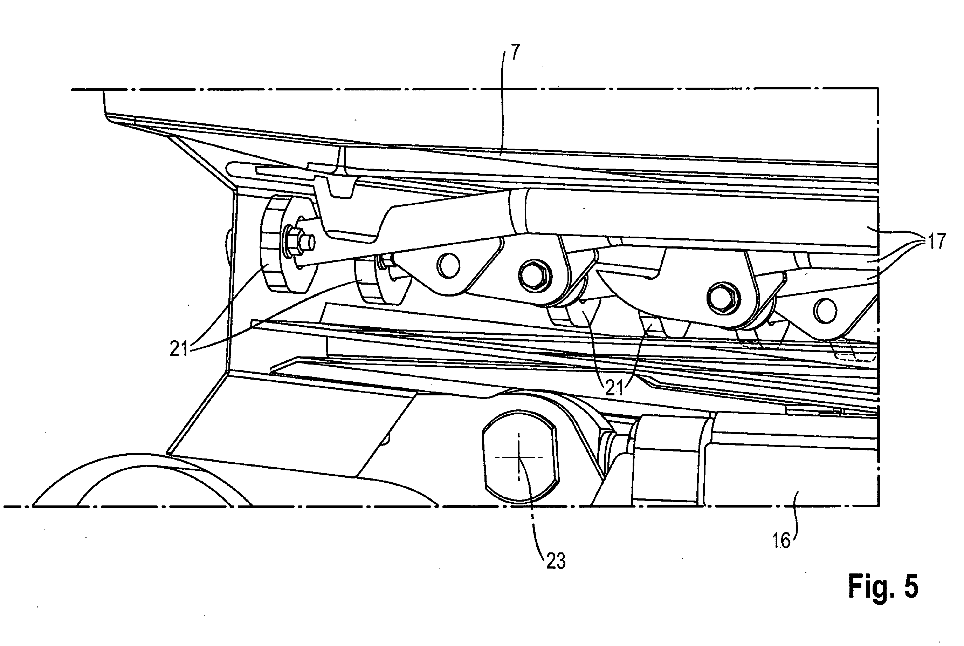

In den Fig. 4 ist eine Teilansicht des Seitenabschnittes 4 gemäß Fig. 2 von hinten dargestellt. In einem zu dem unteren Profilelement 13 benachbarten Bereich der Rückwand 15 erstrecken sich die parallel zueinander angeordneten Tragelemente 17 abschnittsweise durch die Rückwand 15 hindurch. Das jeweilige Tragelement 17 ist mit seinem Endabschnitt in einem Schubgelenk 21 gelagert. Wie aus der Darstellung in Fig. 5 ersichtlich ist, sind die den Messerbalken 6 tragenden Tragarme 16 um eine gemeinsame, zu dem unteren Profilelement 13 achsparallele Drehachse 22 schwenkbar, während die das Förderband 7 tragenden Tragelemente 17 unabhängig hiervon in der Rückwand 15 gelagert sind. Eine zumindest abschnittsweise vertikale Auslenkung des Messerbalkens 6 führt zu einer Drehbewegung mindestens eines Tragarmes 16 um die gemeinsame Drehachse 23. Die jeweiligen, im Bereich oberhalb des ausgelenkten Tragarmes 16 angeordneten Tragelemente 17 werden ebenfalls in vertikaler Richtung ausgelenkt, wobei diese durch das jeweilige Schubgelenk 21 geführt, in im Wesentlichen horizontaler Richtung verschoben werden. Je nach Art der Auslenkung des Messerbalkens 6, das heißt bei einem partiellen Anheben oder Absenken des Messerbalkens 6, führt dies zu einer Relativbewegung der Tragelemente 17 gegenüber den Schubgelenken 21 in diesem Bereich. Die Relativbewegung der Tragelemente 17 wird durch die maximal zulässige vertikale Auslenkung des von den Tragarmen 16 getragenen Messerbalkens 6 begrenzt.

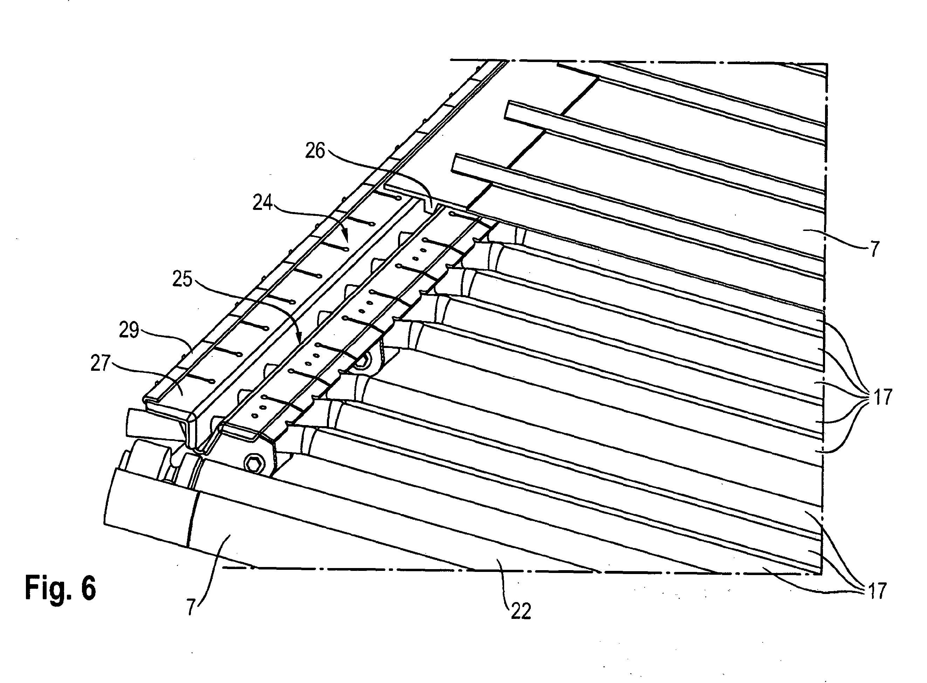

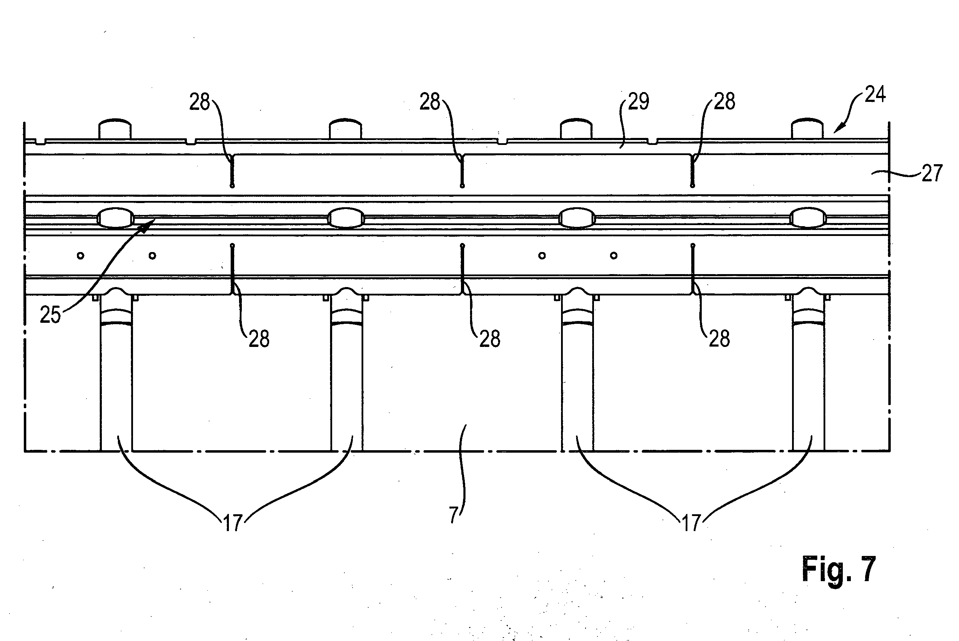

In der Fig. 6 ist eine teilweise freigeschnittene Ansicht auf das Förderband 7 von schräg oben dargestellt. Fig. 7 zeigt eine Detailansicht einer Bandführung gemäß Fig. 6 von oben. Wie aus der Darstellung in Fig. 7 ersichtlich ist, weist das Förderband 7 auf seiner den Tragelementen 17 zugewandten Seite ein in Umlaufrichtung gesehen durchgehendes Führungselement 26 auf, beispielsweise in Form einer Rippe mit polyedrischem Querschnitt, das von einer Bandführung 24 in einer mit der Form des Führungselementes 26 korrespondierenden Führungsaussparung 25 aufgenommen ist. Die Bandführung 24 ist auf den Tragelementen 17 an ihren der Rückwand 15 zugewandten Endabschnitten relativ beweglich angeordnet. Hierdurch wird sichergestellt, dass bei einer partiellen vertikalen Auslenkung des Messerbalkens 6, die zu einer horizontalen Bewegung der Tragelemente 17 in diesem Bereich in Richtung der Schubgelenke 21 führt, die Position der Bandführung 24 gegenüber den benachbarten Tragelementen 17, die keine Auslenkung erfahren, im Wesentlichen beibehalten wird, um einen gleichmäßigen Umlauf des Förderbandes 7 zu gewährleisten. Die Bandführung 24 ist als zumindest ein profiliertes, plattenförmiges Segment 27 ausgeführt, welches sich abschnittsweise in Längsrichtung des jeweiligen Tragelementes 17 erstreckt und von diesem durchdrungen wird. Das Segment 27 weist eine sich abschnittsweise senkrecht zu seiner Oberfläche erstreckende, parallel zu der Rückwand 15 verlaufende Wandung 29 auf, die als Begrenzung der Bewegungsfreiheit des Förderbandes 7 in Längsrichtung der Tragelemente 17 dient. Die Darstellung der Bandführung in der Ansicht von oben gemäß Fig. 7 zeigt, dass das Segment 27 durch sich parallel zu den Tragelementen 17 erstreckende Ausnehmungen 28 abschnittsweise unterbrochen ist. Die Ausnehmungen 28 sind hierbei einander gegenüberliegend angeordnet, wodurch ein hohes Maß an Torsions- und Biegeflexibilität der Bandführung 24 erreicht wird. Ein weiterer vorteilhafter Aspekt der Ausgestaltung der Bandführung 24 besteht darin, dass die Breite der Führungsnut 25 und der Abstand der Wandung 29 zu der Führungsnut 25 ein Verhältnis aufweisen, welches so gewählt ist, dass die Führung des Förderbandes 7 entweder vorrangig von der Führungsrippe 26 und der korrespondierenden Führungsnut 25 beziehungsweise von der Wandung 29 und der Außenkante des Förderbandes 7 übernommen wird. Hierbei gilt, dass bei einem abschnittsweisen Absenken des Messerbalkens 6 gegenüber einer Mittenlage die Führung des Förderbandes 7 von der Führungsrippe 26 und der korrespondierenden Führungsnut 25 übernommen wird. Wird der Messerbalken 6 partiell angehoben, so wird die Führung des Förderbandes 7 von der Anlauffläche 29 und der Außenkante des Förderbandes 7 übernommen.

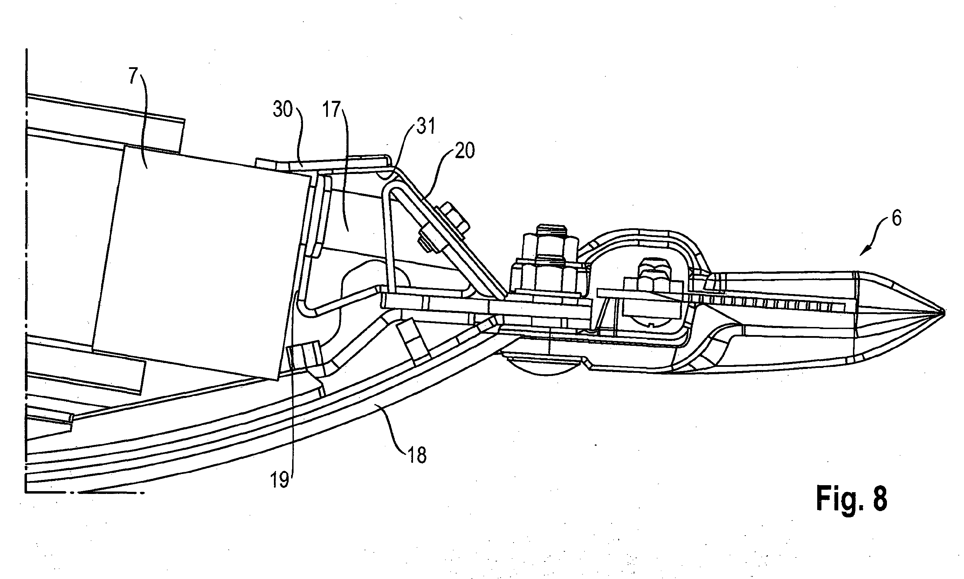

Die Darstellung in Fig. 8 zeigt den Messerbalken 6 und eine Teilansicht des vorderen Bereiches des Schneidwerkes 1 von der Seite. Wie der Darstellung zu entnehmen ist, sind an dem Messerbalken 6 über dessen Breite verteilt eine Vielzahl von als Übergangsbelche 20 ausgeführten Gutleitelementen unter einem Winkel zu dem Messerbalken 6 geneigt nebeneinander angeordnet, wie aus der Darstellung in den Fig. 2 und 3 entnehmbar ist. Jedes Gutleitelement 20 weist eine annähernd parallel zu der Oberseite des Förderbandes 7 liegende Stirnkante 31 auf, an der ein durchgehendes, sich über die Breite des jeweils mindestens einen Seitenabschnittes 4 des Schneidwerkes 1 erstreckendes Abdichtband 30 befestigt ist, welches das Förderband 7 abschnittsweise überlappt. Das durchgehende Abdichtband 30 sorgt für eine zuverlässige Abdichtung auch bei einem Höhen- und Längenausgleich durch die Bewegung der Tragelemente 17 hervorgerufen durch die vertikale Auslenkung des Messerbalkens 6.

**Bezugszeichenliste**

| | | | |
|---|---|---|---|
| **1** | Schneidwerk | **31** | Stirnkante |
| **2** | Grundrahmen | | |
| **3** | Mittenabschnitt | | |
| **4** | Seitenabschnitt | | |
| **5** | Fördervorrichtung | | |
| **6** | Messerbalken | | |
| **7** | Förderband | | |
| **8** | Einzugsvorrichtung | | |
| **9** | Bodenplatte | | |
| **10** | Einzugswalze | | |
| **10a** | Einzugsschnecke | | |
| **11** | Vorsprung | | |
| **12** | Spitze | | |
| **13** | Profilelement | | |
| **14** | Profilelement | | |
| **15** | Rückwand | | |
| **16** | Tragarm | | |
| **17** | Tragelement | | |
| **18** | Gleitkufen | | |
| **19** | Anlagefläche | | |
| **20** | Übergangsblech | | |
| **21** | Schubgelenk | | |
| **22** | Umlenkrolle | | |
| **23** | Drehachse | | |
| **24** | Bandführung | | |
| **25** | Führungsaussparung | | |
| **26** | Führungselement | | |
| **27** | Segment | | |
| **28** | Ausnehmung | | |
| **29** | Wandung | | |
| **30** | Abdichtband | | |

## Patentansprüche

1. Schneidwerk (1), umfassend einen an einem Grundrahmen (2) angeordneten Mittenabschnitt (3) und mindestens zwei benachbart zu dem Mittenabschnitt (3) angeordnete Seitenabschnitte (4), eine sich im Wesentlichen senkrecht zum Grundrahmen (2) erstreckende Rückwand (15), einen flexiblen, sich über die Breite des Schneidwerkes (1) erstreckenden Messerbalken (6) sowie zumindest eine hinter dem Messerbalken (6) angeordnete Fördervorrichtung (5), die auf den jeweiligen Seitenabschnitten (4) als mindestens ein endloses Förderband (7) ausgeführt ist, welches benachbart zu dem Mittenabschnitt (3) angeordnet ist, um von dem Messerbalken (6) abgeschnittenes Erntegut seitwärts in Richtung des Mittenabschnittes (3) zu transportieren, wobei die Seitenabschnitte (4) eine Vielzahl von schwenkbar an dem Grundrahmen angeordneten Tragarmen (16) aufweisen, die den Messerbalken (6) tragen, und wobei
der jeweilige Seitenabschnitt (4) eine Vielzahl von das Förderband (7) tragende Tragelementen (17) aufweist, **dadurch gekennzeichnet, dass** die das Förderband (7) tragende Elemente (17) in axialer Richtung gegenüber dem Grundrahmen (2) in einer Lagerstelle (21) verschiebbar gelagert sind.

2. Schneidwerk (1) nach Anspruch 1, **dadurch gekennzeichnet, dass** die Lagerstelle des jeweiligen Tragelementes (17) als ein Schubgelenk (21) ausgeführt ist.

3. Schneidwerk (1) nach einem der Ansprüche 1 oder 2, **dadurch gekennzeichnet, dass** jedes Tragelement (17) an seinem dem Messerbalken (6) zugewandten Endabschnitt eine Anlagefläche (19) für das Förderband (7) aufweist.

4. Schneidwerk (1) nach einem der Ansprüche 1 oder 2, **dadurch gekennzeichnet, dass** auf den Tragelementen (17) an ihren der Rückwand (15) zugewandten Endabschnitten eine Bandführung (24) angeordnet ist.

5. Schneidwerk (1) nach Anspruch 4, **dadurch gekennzeichnet, dass** die Tragelemente (16) relativ zu der Bandführung (24) beweglich sind.

6. Schneidwerk (1) nach einem der Ansprüche 4 oder 5, **dadurch gekennzeichnet, dass** die Bandführung (24) von den Tragelementen (16) durchdrungen ist.

7. Schneidwerk (1) nach einem der Ansprüche 4 bis 6, **dadurch gekennzeichnet, dass** die Bandführung (24) als zumindest ein profiliertes, plattenförmiges Segment (27) ausgeführt ist, welches sich abschnittsweise in Längsrichtung des jeweiligen Tragelementes (16) erstreckt.

8. Schneidwerk (1) nach Anspruch 7, **dadurch gekennzeichnet, dass** das Segment (27) eine sich parallel zum Grundrahmen (2) erstreckende Führungsausnehmung (25) aufweist.

9. Schneidwerk (1) nach einem der Ansprüche 7 oder 8, **dadurch gekennzeichnet, dass** das Segment (27) sich parallel zu den Tragelementen (17) erstreckende, zueinander beabstandet angeordnete Ausnehmungen (28) aufweist.

10. Schneidwerk (1) nach Anspruch 9, **dadurch gekennzeichnet, dass** die Ausnehmungen (28) beidseitig der Führungsausnehmung (25) angeordnet sind.

11. Schneidwerk (1) nach einem der Ansprüche 7 bis 9, **dadurch gekennzeichnet, dass** das Segment (27) eine sich abschnittsweise senkrecht zu seiner Oberfläche erstreckende, parallel zu dem Grundrahmen (2) verlaufende Wandung (29) aufweist.

12. Schneidwerk (1) nach einem der Ansprüche 1 bis 11, **dadurch gekennzeichnet, dass** an dem Messerbalken (6) über dessen Breite verteilt eine Vielzahl von Gutleitelementen (20) unter einem Winkel zu diesem geneigt nebeneinander angeordnet sind.

13. Schneidwerk (1) nach Anspruch 12, **dadurch gekennzeichnet, dass** jedes Gutleitelement (20) eine annähernd parallel zu der Oberseite des Förderbandes (7) liegende Stirnkante (31) aufweist, an der ein durchgehendes, sich über die Breite des jeweils mindestens einen Seitenabschnittes (4) des Schneidwerkes (1) erstreckendes Abdichtband (30) befestigt ist, welches das Förderband (7) abschnittsweise überlappt.

## Claims

1. A header (1) including a central portion (3) arranged on a main frame (2) and at least two side portions (4) arranged adjacent to the central portion (3), a rear wall (15) extending substantially perpendicularly to the main frame (2), a flexible cutter bar (6) extending over the width of the header (1), and at least one conveyor device (5) which is arranged behind the cutter bar (6) and which on the respective side portions (4) is in the form of at least one endless conveyor belt (7) arranged adjacent to the central portion (3) to transport crop material cut down by the cutter bar (6) laterally in the direction of the central portion (3), wherein the side portions (4) have a plurality of carrier arms (16) which are arranged pivotably on the main frame and which carry the cutter bar (6), and wherein the respective side portion (4) has a plurality of carrier elements (17) carrying the conveyor belt (7), **characterised in that** the elements (17) carrying the conveyor belt (7) are mounted displaceably in the axial direction with respect to the main frame (2) in a mounting location (21).

2. A header (1) according to claim 1 **characterised in that** the mounting location of the respective carrier element (17) is in the form of a sliding joint (21).

3. A header (1) according to one of claims 1 and 2 **characterised in that** at its end portion towards the cutter bar (6) each carrier element (17) has a contact surface (19) for the conveyor belt (7).

4. A header (1) according to one of claims 1 and 2 **characterised in that** a belt guide (24) is arranged on the carrier elements (17) at their end portions towards the rear wall (15).

5. A header (1) according to claim 4 **characterised in that** the carrier elements (16) are moveable relative to the belt guide (24).

6. A header (1) according to one of claims 4 and 5 **characterised in that** the belt guide (24) has the carrier elements (16) passing therethrough.

7. A header (1) according to one of claims 4 to 6 **characterised in that** the belt guide (24) is in the form of at least one profiled, plate-shaped segment (27) which extends portion-wise in the longitudinal direction of the respective carrier element (16).

8. A header (1) according to claim 7 **characterised in that** the segment (27) has a guide recess (25) extending parallel to the main frame (2).

9. A header (1) according to one of claims 7 and 8 **characterised in that** the segment (27) has recesses (28) extending parallel to the carrier elements (17) and arranged in mutually spaced relationship.

10. A header (1) according to claim 9 **characterised in that** the recesses (28) are arranged on both sides of the guide recess (25).

11. A header (1) according to one of claims 7 to 9 **characterised in that** the segment (27) has a wall (29) extending portion-wise perpendicularly to its surface and extending parallel to the main frame (2).

12. A header (1) according to one of claims 1 to 11 **characterised in that** a plurality of material guide elements (20) are arranged in mutually juxtaposed relationship on the cutter bar (6) distributed over the width thereof and inclined at an angle relative thereto.

13. A header (1) according to claim 12 **characterised in that** each material guide element (20) has a front edge (31) which is approximately parallel to the top side of the conveyor belt (7) and to which there is fixed a continuous sealing band (30) which extends over the width of the at least one respective side portion (4) of the header (1) and which portion-wise overlaps the conveyor belt (7).

## Revendications

1. Tablier de coupe (1) comprenant une portion centrale (3) disposée sur un châssis de base (2) et au moins deux portions latérales (4) disposées de manière adjacente à la portion centrale (3), une paroi arrière (15) s'étendant sensiblement verticalement par rapport au châssis de base (2), une barre de coupe flexible (6) s'étendant sur la largeur du tablier de coupe (1) ainsi qu'au moins un dispositif de convoyage (5) qui est disposé derrière la barre de coupe (6) et conformé, sur chacune des portions latérales (4), en au moins une bande de convoyage sans fin (7) et qui est disposé de manière adjacente à la portion centrale (3) pour transporter du produit de récolte coupé par la barre de coupe (6) latéralement en direction de la portion centrale (3), les portions latérales (4) comportant une pluralité de bras porteurs (16) qui sont montés pivotants sur le châssis de base et qui portent la barre de coupe (6), et chaque portion latérale (4) comportant une pluralité d'éléments porteurs (17) portant la bande de convoyage (7), **caractérisé en ce que** les éléments (17) portant la bande de convoyage (7) sont montés mobiles dans la direction axiale, dans un point d'appui (21), par rapport au châssis de base (2).

2. Tablier de coupe (1) selon la revendication 1, **caractérisé en ce que** le point d'appui de chaque élément porteur (17) est conformé en articulation à glissière (21).

3. Tablier de coupe (1) selon une des revendications 1 ou 2, **caractérisé en ce que** chaque élément porteur (17) comporte, dans sa portion d'extrémité tournée vers la barre de coupe (6), une surface d'appui (19) pour la bande de convoyage (7).

4. Tablier de coupe (1) selon une des revendications 1 ou 2, **caractérisé en ce que** sur les éléments porteurs (17), dans leurs portions d'extrémité tournées vers la paroi arrière (15), est disposé un moyen de guidage de bande (24).

5. Tablier de coupe (1) selon la revendication 4, **caractérisé en ce que** les éléments porteurs (16) sont mobiles par rapport au moyen de guidage de bande (24).

6. Tablier de coupe (1) selon une des revendications 4 ou 5, **caractérisé en ce que** le moyen de guidage de bande (24) est traversé par les éléments porteurs (16).

7. Tablier de coupe (1) selon une des revendications 4 à 6, **caractérisé en ce que** le moyen de guidage de bande (24) est conformé en au moins un segment profilé en forme de plaque (27) qui s'étend par endroits dans la direction longitudinale de chaque élément porteur (16).

8. Tablier de coupe (1) selon la revendication 7, **caractérisé en ce que** le segment (27) comporte un évidement de guidage (25) s'étendant parallèlement au châssis de base (2).

9. Tablier de coupe ((1) selon une des revendications 7 ou 8, **caractérisé en ce que** le segment (27) comporte des évidements (28) s'étendant parallèlement aux éléments porteurs (17) et disposés à distance les uns des autres.

10. Tablier de coupe (1) selon la revendication 9, **caractérisé en ce que** les évidements (28) sont disposés de part et d'autre de l'évidement de guidage (25).

11. Tablier de coupe (1) selon une des revendications 7 à 9, **caractérisé en ce que** le segment (27) comporte une paroi (29) qui s'étend par endroits perpendiculairement à sa surface supérieure et qui est parallèle au châssis de base (2).

12. Tablier de coupe (1) selon une des revendications 1 à 11, **caractérisé en ce qu'**une pluralité d'éléments d'orientation de récolte (20) sont disposés côte à côte sur la barre de coupe (6) en étant répartis sur sa largeur, selon un angle par rapport à elle.

13. Tablier de coupe (1) selon la revendication 12, **caractérisé en ce que** chaque élément d'orientation de récolte (20) comporte un bord frontal (31) qui est à peu près parallèle au dessus de la bande de convoyage (7) et auquel est fixée une bande d'étanchéité continue (30), laquelle s'étend sur la largeur d'au moins chaque portion latérale (4) du tablier de coupe (1) et recouvre par endroits la bande de convoyage (7).
